Europäisches Patentamt

European Patent Office

Office européen des brevets

(19)

(11) Numéro de publication. **0 160 603**
**A1**

(12)

# DEMANDE DE BREVET EUROPEEN

(21) Numéro de dépôt: **85400689.7**

(22) Date de dépôt: **05.04.85**

(51) Int. Cl.⁴: **G 21 C 13/06**
**G 21 C 1/02**

(30) Priorité: **11.04.84 FR 8405720**

(43) Date de publication de la demande:
**06.11.85 Bulletin 85/45**

(84) Etats contractants désignés:
**BE DE GB IT NL**

(71) Demandeur: **NOVATOME**
**La Boursidière R.N. 186**
**F-92357 Le Plessis Robinson(FR)**

(72) Inventeur: **Bouilloux, Yves**
**22 boulevard de Ménilmontant**
**F-75020 Paris(FR)**

(74) Mandataire: **Moncheny, Michel et al,**
**c/o Cabinet Lavoix 2 Place d'Estienne d'Orves**
**F-75441 Paris Cedex 09(FR)**

(54) **Bouchon-couvercle du coeur d'un réacteur nucléaire à neutrons rapides.**

(57) L'invention concerne le bouchon-couvercle du coeur d'un réacteur nucléaire à neutrons rapides.

Il comporte une enveloppe cylindrique (8) fermée par une plaque transversale (12) dont la partie centrale (12a) est plane et la partie périphérique (12b) soudée à l'enveloppe (8), tronconique. La plaque (12) est percée d'ouvertures (13, 25) et permet le passage des tubes de termocouples (26). A l'intérieur de l'enveloppe (8) sont disposés des tubes verticaux (10) de guidage des barres de commande et de l'instrumentation du coeur. Le tube (20) disposé au voisinage de l'axe ZZ' du coeur porte à sa partie inférieure une entretoise (21). L'enveloppe (8) est percee d'ouvertures (14) dans sa paroi latérale entre la plaque de fermeture (12) et une zone située juste au-dessus de l'entretoise (21). Les tubes (10, 20) sont percés d'ouvertures (28, 29) au voisinage de l'entretoise (1) et du niveau (5) du fluide de refroidissement.

L'invention s'applique, en particulier, aux réacteurs nucléaires refroidis par du sodium liquide.

EP 0 160 603 A1

## Bouchon-couvercle du coeur d'un réacteur nucléaire à neutrons rapides

L'invention concerne un bouchon-couvercle du coeur d'un réacteur nucléaire à neutrons rapides.

Les réacteurs nucléaires à neutrons rapides qui sont généralement refroidis par un métal liquide tel que le sodium comportent une cuve fermée par une dalle horizontale de grande épaisseur et remplie par du sodium liquide de refroidissement dans lequel plonge le coeur du réacteur. Au-dessus du coeur, on dispose un ensemble appelé "bouchon-couvercle du coeur" qui supporte les tubes-fourreaux des barres de commande et toute l'instrumentation du coeur comprenant en particulier les tubes de prélèvement de sodium à la sortie des assemblages et les thermocouples pour la mesure des températures dans les assemblages du coeur. Ce bouchon-couvercle du coeur assure également par sa partie inférieure la déflection du courant de sodium sortant du coeur pour le diriger vers les échangeurs intermédiaires à la périphérie de la cuve.

Le bouchon-couvercle du coeur est constitué par une enveloppe de forme générale cylindrique à axe vertical dont la partie supérieure est fixée sur une plaque de support reposant sur un bouchon tournant monté sur la dalle du réacteur. Une ouverture pour le passage du bouchon-couvercle du coeur est prévue dans ce bouchon tournant qui est monté mobile en rotation autour d'un axe vertical sur la dalle de fermeture de la cuve du réacteur.

Les tubes-fourreaux des barres de commande ainsi que des tubes d'instrumentation sont fixés à leur partie supérieure sur la plaque de support et traversent verticalement l'enveloppe cylindrique sur toute sa hauteur. Sur ces tubes sont fixées de façon rigide des entretoises transversales par rapport à l'enveloppe cylindrique du bouchon-couvercle du coeur. Cet ensemble de grande hauteur par rapport à son diamètre plonge dans la cuve à la verticale du coeur, sous le niveau du sodium liquide et comporte à sa partie inférieure une grille fixée sur les tubes-fourreaux des barres de commande qui assure le guidage des tubes de prélèvement de sodium et des tubes de passage des thermocouples.

Un tel ensemble de grande hauteur comportant une structure rigide subit des contraintes mécaniques et des contraintes thermiques de grande amplitude pendant le fonctionnement du réacteur. De plus, la grille de support de l'instrumentation disposée à l'extérieur de l'enveloppe cylindrique du bouchon-couvercle du coeur, a sa partie inférieure, est percée sur une

2                              **0160603**

grande partie de sa surface (90 %) puisqu'elle est traversée aussi bien par les tubes-fourreaux que par les tubes de prélèvement de sodium et de passage des thermocouples ainsi que par des trous nécessaires pour le passage du sodium ayant traversé les assemblages, dans le bouchon-couvercle du coeur. Cette grille est donc une pièce dont la réalisation est difficile et dont la résistance, à cause de la faible quantité de métal résiduel, risque d'être insuffisante. Cette pièce est en outre exposée directement au flux de sodium à haute température et à fort débit sortant du coeur du réacteur.

On a proposé par exemple dans les demandes de brevet français 2.289.031 et 82-18570 des bouchons-couvercles du coeur d'un réacteur nucléaire à neutrons rapides ayant des structures permettant de diminuer les contraintes d'origine thermique et d'améliorer la répartition du sodium sortant du coeur du réacteur.

De telles structures sont cependant relativement complexes et comportent en particulier un ensemble d'entretoises transversales fixées sur les tubes-fourreaux qui augmentent les difficultés de montage et de réalisation du bouchon-couvercle du coeur.

En outre, ces dispositifs selon l'art antérieur nécessitent toujours la présence d'une plaque support ou grille percée sur une très grande partie de sa surface, à la partie inférieure du bouchon-couvercle du coeur dans sa partie située immédiatement au-dessus du coeur du réacteur.

Le but de l'invention est donc de proposer un bouchon-couvercle du coeur d'un réacteur nucléaire à neutrons rapides, assurant la fixation et le guidage des barres de commande et de l'instrumentation du coeur ainsi que la déflection et la dispersion du fluide de refroidissement du coeur et comportant une plaque de support reposant sur un bouchon tournant fermant la cuve du réacteur, autour de l'ouverture de passage du bouchon-couvercle du coeur dans le bouchon tournant, une enveloppe de forme générale sensiblement cylindrique à axe vertical et solidaire à sa partie supérieure de la plaque de support, un ensemble de tubes verticaux destinés en particulier à recevoir les barres de commande du réacteur fixés à leur partie supérieure sur la plaque de support et disposés à l'intérieur de l'enveloppe et au moins une entretoise de maintien transversal des tubes disposée perpendiculairement à l'axe de l'enveloppe, ce bouchon-couvercle devant être d'une structure simple et susceptible de limiter les contraintes en particulier d'origine thermique pendant le fonctionnement du réacteur et ne nécessitant pas la présence d'une plaque de support d'instrumentation fortement percée à sa partie inférieure.

Dans ce but :

- l'enveloppe comporte une plaque de fermeture transversale ayant une partie centrale plane et une partie périphérique tronconique soudée à la partie inférieure de l'enveloppe, en dessous des extrémités inférieures des tubes et percée de trous à la verticale des tubes pour le passage des barres de commande et de l'instrumentation du coeur, de trous pour le passage du sodium et d'ouvertures pour le passage de guides de thermocouples qui sont montés glissants dans la plaque de fermeture,

- l'un des tubes situé au voisinage de l'axe ZZ' du coeur est solidaire à sa partie inférieure d'une entretoise unique maintenue par son bord externe en position axiale fixe et avec un certain jeu radial dans l'enveloppe, cette entretoise assurant la fixation des guides de thermocouple et constituant le seul moyen de maintien transversal des tubes dont les parties inférieures sont montées glissantes dans des ouvertures de l'entretoise pour leur libre dilatation dans la direction axiale,

- l'enveloppe est percée d'ouvertures dans sa paroi latérale entre la plaque de fermeture et une zone située immédiatement au-dessus de l'entretoise,

- et les tubes sont percés d'ouvertures de passage du fluide de refroidissement de part et d'autre et au voisinage immédiat de l'entretoise et juste en-dessous du niveau supérieur du fluide de refroidissement.

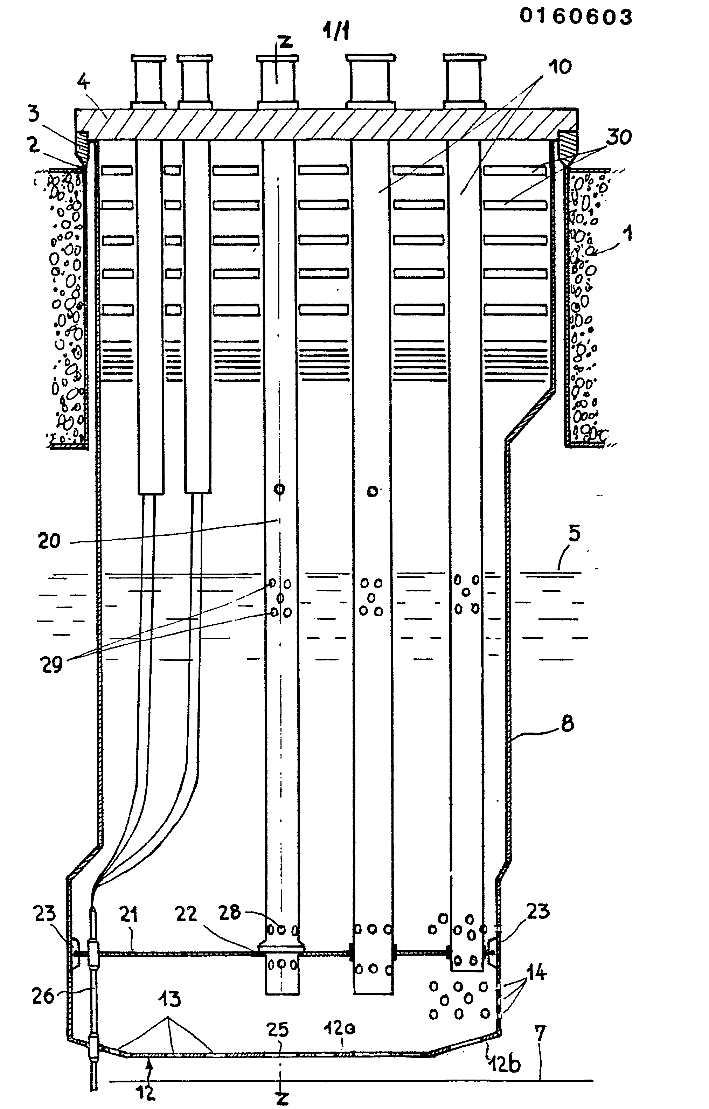

Afin de bien faire comprendre l'invention, on va maintenant décrire à titre d'exemple non limitatif, en se référant à la figure jointe en annexe, un mode de réalisation d'un bouchon-couvercle du coeur d'un réacteur nucléaire à neutrons rapides suivant l'invention.

La figure unique représente une vue en coupe par un plan vertical du bouchon-couvercle du coeur en position dans la cuve du réacteur.

Sur la figure unique, on voit la partie centrale du petit bouchon tournant 1 du réacteur comportant une ouverture cylindrique à axe vertical suivant laquelle est fixée une virole 2 sur la partie supérieure 3 de laquelle repose la plaque de support 4 du bouchon-couvercle du coeur.

Le petit bouchon tournant 1 est lui-même disposé à l'intérieur du grand bouchon tournant et de façon excentrée par rapport à ce grand bouchon tournant. Le grand bouchon tournant est disposé à l'intérieur de la dalle horizontale du réacteur qui ferme la cuve remplie jusqu'au niveau 5 de sodium constituant le fluide de refroidissement du réacteur. Le coeur du réacteur est entièrement plongé dans le sodium liquide remplissant la cuve. Le niveau supérieur 7 du coeur par où sort le sodium liquide ayant traversé

4          **0160603**

les assemblages a été représenté sur la figure.

Le bouchon-couvercle du coeur comporte une enveloppe de forme générale cylindrique 8 fixée à sa partie supérieure à la plaque de support 4 et constituée par plusieurs viroles à axe vertical de forme sensiblement cylindrique reliées entre elles par des parties tronconiques. Cet ensemble est approximativement centré sur l'axe vertical ZZ' du coeur.

Les tubes fourreaux 10 des barres de commande du réacteur sont fixés à leur partie supérieure sur la plaque support 4 et sont disposés à l'intérieur de l'enveloppe 8 du bouchon-couvercle du coeur. Cette enveloppe cylindrique 8 est fermée à sa partie inférieure, en-dessous des extrémités inférieures des tubes 10 par une plaque 12 soudée sur la virole 8, centrée sur l'axe ZZ' du coeur et disposée à proximité immédiate de la partie supérieure 7 du coeur. Les tubes fourreaux 10 sont donc contenus entièrement dans le volume intérieur de l'enveloppe cylindrique 8 fermée par la plaque 12.

La plaque de fermeture 12 comporte une partie plane centrale 12a et une partie périphérique tronconique 12b ayant un angle au sommet voisin de 160°. Le diamètre de la plaque de fermeture 12 correspond pratiquement au diamètre du coeur et le diamètre de la partie centrale 12a est sensiblement égal aux deux tiers du diamètre extérieur de la plaque 12.

Le tube 20 disposé avec son axe sensiblement suivant l'axe ZZ' du coeur parallèlement aux tubes fourreaux 10 est relié de façon rigide, à sa partie inférieure, à une plaque entretoise 21 plane et horizontale placée transversalement dans la partie inférieure de l'enveloppe cylindrique 8 du bouchon-couvercle du coeur. Cette entretoise 21 est maintenue en position axiale fixe par des dispositifs de fixation 23 solidaires de la surface intérieure de l'enveloppe cylindrique 8. Les dimensions extérieures de la plaque entretoise 21 sont telles qu'un léger jeu radial est maintenu entre cette plaque et la surface intérieure de l'enveloppe cylindrique 8. L'entretoise 21 peut donc se dilater à l'intérieur de l'enveloppe 8 tout en étant maintenue parfaitement dans la direction axiale ZZ' et immobilisée en rotation autour de ZZ'. Cette plaque entretoise 21 est percée d'ouvertures 22 qui assurent le passage des tubes 10 et permettent leur libre dilatation axiale. Chacune des ouvertures 22 correspond à la position d'un tube 10, pour le passage de la partie inférieure de ce tube 10 au travers de la plaque entretoise 21.

Les tubes 10 sont donc engagés, pour leur maintien transversal, dans la plaque entretoise 21 sans être fixés sur celle-ci.

5

**0160603**

A la verticale de chacun des tubes 10 et du tube central 16, la plaque 12 est percée d'une ouverture 25 pour le passage des barres de commande et de l'instrumentation du coeur.

Cette plaque inférieure 12 est également percée d'ouvertures permettant le guidage de tubes d'instrumentation 26 recevant des thermocouples ou de tubes permettant le prélèvement de sodium à la verticale de chacun des assemblages. Ces tubes sont fixés à la plaque 21. En plus des trous 25 à la verticale des tubes fourreau 10, la plaque de fermeture inférieure 12 comporte des trous de passage de sodium 13 qui représentent environ 30 % de sa surface dans sa partie centrale plane 12a et 20 % environ dans sa partie périphérique tronconique 12b. L'ensemble des trous et ouvertures ménagés dans la partie centrale (12a) de la plaque de fermeture (12) représente environ 60 % de la surface de cette partie (12a).

L'entretoise 21 n'est pas percée.

La déflection et la répartition du sodium sortant du coeur par sa partie supérieure 7 sont assurées par la partie inférieure du bouchon-couvercle du coeur et en particulier par la plaque de fermeture inférieure 12, l'entretoise 21 et la surface latérale inférieure de l'enveloppe 8. Cette enveloppe 8 doit donc comporter des ouvertures de sortie du sodium 14 qui sont ménagées dans une zone située entre la plaque de fermeture 12 et un niveau situé un peu au-dessus de la plaque entretoise 21. Les perçages (14) de l'enveloppe cylindrique 8 représentent 40 % environ de la surface de la zone percée.

En outre, les tubes 10 sont également percés dans leur surface latérale de trous 28 de part et d'autre et au voisinage immédiat de l'entretoise 21 et de trous 29 juste en-dessous du niveau de sodium liquide 5. Les trous 29 doivent être ménagés dans la paroi des tubes- fourreaux 10 sur une hauteur correspondant aux différentes positions du niveau de sodium en fonction de la température et de l'allure de fonctionnement du réacteur. La virole 8 est également percée de quelques trous d'équilibrage de pression nettement au-dessus du niveau 5 du sodium liquide.

La partie supérieure du volume intérieur de l'enveloppe 8, au niveau de la traversée de la dalle du réacteur, est remplie par des plaques d'acier 30 superposées assurant la protection thermique et contre les radiations de la zone disposée au-dessus du bouchon-couvercle du coeur.

Malgré sa très grande simplicité, le bouchon-couvercle du coeur suivant l'invention permet une bonne répartition du sodium, par les possibilités multiples qu'il offre pour la circulation de ce sodium.

6

0160603

Une partie du sodium sortant du coeur et se déplaçant dans la direction verticale de bas en haut est renvoyée vers l'extérieur par la partie tronconique 12b de la plaque de fermeture 12 qui est faiblement percée alors qu'une autre partie de ce sodium entre dans le volume intérieur du bouchon-couvercle du coeur, en particulier par les ouvertures 25 et 13. Ce sodium pénétrant dans l'enveloppe du bouchon-couvercle du coeur est arrêté en majeure partie par la plaque entretoise 21 qui ne comporte pas d'ouverture. Une grande partie du sodium est donc renvoyée vers l'extérieur et répartie à la périphérie du bouchon-couvercle du coeur par les ouvertures ménagées dans la partie inférieure de la surface latérale de l'enveloppe cylindrique 8.

Une autre partie du sodium traverse la plaque entretoise 21 par les ouvertures 28. Ce sodium peut ressortir de l'enveloppe du bouchon couvercle du coeur par la surface latérale de cette enveloppe qui est percée dans une zone de faible hauteur au-dessus de la plaque entretoise 21.

Le sodium dirigé vers l'extérieur par les différents moyens de déflection qui viennent d'être décrits est dirigé vers les fenêtres d'entrée des échangeurs de chaleur disposés à la périphérie et au-dessus du coeur.

On voit que la structure du bouchon-couvercle du coeur suivant l'invention est particulièrement simple, puisqu'elle ne comporte qu'une enveloppe cylindrique comportant une plaque de fermeture inférieure et une plaque entretoise maintenue par un seul tube disposé de façon centrale par rapport aux autres tubes fourreaux. La virole 8, la plaque de fermeture 12 et l'entretoise 21 du bouchon-couvercle du coeur peuvent être réalisées à partir de tôles d'acier de même épaisseur, par exemple de tôles d'une épaisseur de vingt millimètres. Malgré sa simplicité, le bouchon-couvercle du coeur permet une bonne répartition du sodium et évite l'apparition de contraintes thermiques dans sa structure puisque les différents éléments (plaque entretoise, tubes, enveloppe cylindrique) peuvent se dilater librement les uns par rapport aux autres.

Enfin, le bouchon-couvercle du coeur suivant l'invention ne nécessite pas de grille de guidage de l'instrumentation percée sur la plus grande partie de sa surface, puisque ce guidage est assuré par la plaque de fermeture inférieure de l'enveloppe du bouchon-couvercle du coeur qui est maintenue par soudage sur celle-ci et non pas par les tubes fourreaux.

L'invention ne se limite pas au mode de réalisation qui a été décrit ; elle en comporte au contraire toutes les variantes.

C'est ainsi que l'enveloppe de forme générale cylindrique à axe vertical ZZ' peut avoir une forme différente de celle qui a été décrite où la plaque support 4 et la plaque de fermeture inférieure 12 sont décentrées l'une par rapport à l'autre. Cette enveloppe pourrait être parfaitement cylindrique ou présenter une forme cylindrique approximative différente de celle qui a été décrite.

Les perçages des différentes surfaces permettant le passage du sodium peuvent être différents de ceux qui ont été décrits et être répartis suivant des proportions un peu différentes.

Le mode de fixation axiale de l'entretoise 21 peut être réalisé de manière différente grâce à des dispositifs 23 qui peuvent par exemple être réalisés comme il a été décrit dans le brevet français 82-18570 déposé par la Société NOVATOME.

Enfin, le bouchon-couvercle du coeur suivant l'invention s'applique à tous les réacteurs nucléaires à neutrons rapides utilisant un fluide de refroidissement traversant le coeur de bas et haut et nécessitant une répartition de ce sodium dans la partie de la cuve du réacteur située à la périphérie et au-dessus du coeur.

REVENDICATIONS

1.- Bouchon-couvercle du coeur d'un réacteur nucléaire à neutrons rapides, assurant la fixation et le guidage des barres de commande et de l'instrumentation du coeur ainsi que la déflection et la dispersion du fluide de refroidissement du coeur dont le niveau supérieure (5) est au-dessus du coeur et comportant une plaque support (4) reposant sur un bouchon tournant (1) fermant la cuve du réacteur, autour de l'ouverture de passage du bouchon-couvercle du coeur dans le bouchon tournant (1), une enveloppe (8) de forme générale sensiblement cylindrique à axe vertical ZZ' et solidaire à sa partie supérieure de la plaque support (4), un ensemble de tubes verticaux (10) destinés en particulier à recevoir les barres de commande du réacteur fixés à leur partie supérieure sur la plaque support et disposés à l'intérieur de l'enveloppe (8) et au moins une entretoise (21) de maintien transversal des tubes (10) disposée perpendiculairement à l'axe de l'enveloppe (8),

caractérisé par le fait :

- que l'enveloppe (8) comporte une plaque de fermeture transversale (12) ayant une partie centrale plane (12a) et une partie périphérique tronconique (12b) soudée à la partie inférieure del'enveloppe (8), en-dessous des tubes (10) et percée de trous (25) à la verticale des tubes (10) pour le passage des barres de commande et de l'instrumentation du coeur, de trous (13) pour le passage du sodium et d'ouvertures pour le passage de guides de thermocouples (26) qui sont montés glissants dans la plaque de fermeture (12),

- que l'un des tubes (20) situé au voisinage de l'axe ZZ' du coeur est solidaire à sa partie inférieure d'une entretoise unique (21) maintenue par son bord externe en position axiale fixe et avec un certain jeu radial dans l'enveloppe (8), cette entretoise (21) assurant la fixation des guides de thermocouples (26) et constituant le seul moyen de maintien transversal des tubes (10) dont les parties inférieures sont montées glissantes dans des ouvertures (22) de l'entretoise (21) pour leur libre dilatation dans la direction axiale,

- que l'enveloppe (8) est percée d'ouvertures (14) dans sa paroi latérale entre la plaque de fermeture (12) et une zone située immédiatement au-dessus de l'entretoise (21),

- et que les tubes (10, 20) sont percés d'ouvertures (28, 29) de passage du fluide de refroidissement de part et d'autre et au voisinage immédiat de l'entretoise (21) et juste en-dessous du niveau supérieur (5) du fluide de

0160603

refroidissement.

2.- Bouchon-couvercle suivant la revendication 1, caractérisé par le fait que la partie centrale (12a) de la plaque de fermeture (12) a un diamètre sensiblement égal aux deux-tiers du diamètre de la plaque de fermeture (12).

3.- Bouchon-couvercle suivant l'une quelconque des revendications 1 et 2, caractérisé par le fait que les trous (13, 25) et les ouvertures pour le passage des guides de thermocouples (26) dans la partie centrale (12a) de la plaque de fermeture (12) occupent sensiblement 60 % de la surface de cette partie centrale (12a) et que les trous de passage du fluide de refroidissement dans la partie périphérique (12b) occupent sensiblement 20 % de la surface de cette partie périphérique (12b).

4.- Bouchon-couvercle suivant l'une quelconque des revendications 1 à 3, caractérisé par le fait que les ouvertures (14) dans la paroi latérale de l'enveloppe (8) entre la plaque de fermeture (12) et une zone située immédiatement au-dessus de l'entretoise (21) représentent sensiblement 40 % de la surface de cette partie de la paroi latérale.

## DOCUMENTS CONSIDERES COMME PERTINENTS

| Categorie | Citation du document avec indication en cas de besoin des parties pertinentes | Revendication concernee | CLASSEMENT DE LA DEMANDE (Int Cl 4) |
|---|---|---|---|
| A,D | FR-A-2 289 031 (C.E.A.)<br>* Figures 1,2 *<br><br>--- | 1 | G 21 C 13/06<br>G 21 C 1/02 |
| A | PATENTS ABSTRACTS OF JAPAN, vol. 3, no. 93 (M-68), 8 août 1979, page 139 M 68; & JP - A - 54 69 694 (TOKYO SHIBAURA DENKI K.K.) 04-06-1979<br>* Abrégé; figure *<br><br>--- | 1 | |
| A | PATENTS ABSTRACTS OF JAPAN, no. 154 (M-85), 18 décembre 1979, page 34 M 85; & JP - A - 54 130 788 (TOKYO SHIBAURA DENKI K.K.) 11-10-1979<br>* Abrégé; figure *<br><br>--- | 1 | |
| A | FR-A-2 437 047 (NUCLEAR POWER CO.)<br>* Figures 1,2 *<br><br>--- | 1 | **DOMAINES TECHNIQUES RECHERCHES (Int. Cl.4)**<br><br>G 21 C 1/00<br>G 21 C 13/00 |
| A | EP-A-0 091 872 (NOVATOME)<br>* Figure 2 *<br><br>--- | 1 | |
| A | KERNENERGIE, vol. 17, no. 7, 1974, pages 200-222, Berlin, DE; K. GORSKI et al.: "Das Kernkraftwerk "Bruno Leuschner" Greifswald"<br>* Figure 9 *<br><br>---     -/- | 1 | |

Le présent rapport de recherche a été établi pour toutes les revendications

| Lieu de la recherche | Date d'achevement de la recherche | Examinateur |
|---|---|---|
| LA HAYE | 03-07-1985 | KAVCIC D. |

## DOCUMENTS CONSIDERES COMME PERTINENTS

| Categorie | Citation du document avec indication, en cas de besoin, des parties pertinentes | Revendication concernee | CLASSEMENT DE LA DEMANDE (Int Cl 4) |
|---|---|---|---|
| A | FR-A-2 383 504  (INTERATOM) | | |
| | ----- | | |
| | | | **DOMAINES TECHNIQUES RECHERCHES (Int Cl 4)** |

Le présent rapport de recherche a été établi pour toutes les revendications

| Lieu de la recherche | Date d'achèvement de la recherche | Examinateur |
|---|---|---|
| LA HAYE | 03-07-1985 | KAVCIC D. |